# EUROPEAN PATENT SPECIFICATION

(11) **EP 3 543 037 B1**
(45) Date of publication and mention of the grant of the patent: **30.12.2020**
(21) Application number: 17872486.0
(22) Date of filing: 07.11.2017
(51) Int. Cl.: B60C 11/00, B60B 9/04, B60C 7/00, B60C 7/12, B60B 9/10, B60C 7/18, B60C 7/14, B60B 1/00, B60B 5/02

(54) **NON-PNEUMATIC TIRE**
LUFTLOSER REIFEN
PNEU NON PNEUMATIQUE

(30) Priority: 21.11.2016 JP 2016226139
(43) Date of publication of application: 25.09.2019
(73) Proprietor: Bridgestone Corporation, Tokyo 104-8340 (JP)
(72) Inventor: NISHIDA, Masashi, Tokyo 104-8340 (JP); HASEGAWA, Tatsuya, Tokyo 104-8340 (JP)
(74) Representative: Oxley, Robin John George
(86) International application number: PCT/JP2017/040051
(87) International publication number: WO 2018/092635

(56) References cited:
- EP-A1- 3 231 635
- WO-A1-92/00858
- WO-A1-2014/103841
- JP-A- 2007 118 913
- JP-A- 2010 522 666
- JP-A- 2014 008 952
- US-B1- 6 286 572

## Description

### [Technical Field]

The present invention relates to a non-pneumatic tire.

Priority is claimed on Japanese Patent Application No. 2016-226139, filed November 21, 2016.

### [Background Art]

In the related art, a non-pneumatic tire disclosed in Patent Document 1 is known. The non-pneumatic tire includes an inner tube attached to an axle, an outer tube configured to surround the inner tube from an outer side in a tire radial direction, an elastically deformable connecting member configured to connect the inner tube and the outer tube to each other, and a tread member fitted onto the outer tube.

In the non-pneumatic tire, a space filled with a liquid or the like is formed in the outer tube, the outer tube is easily deformed and a ground contact length of the tread member in a tire circumferential direction is increased.

### [Citation List]

### [Patent Document]

[Patent Document 1]
Japanese Unexamined Patent Application, First Publication No. 2015-116868. Attention is also drawn to the disclosures of US6286572, WO92/00858 and EP3231635.

### [Summary of Invention]

### [Technical Problem]

Incidentally, when such a non-pneumatic tire rides across relatively small protrusions, small stones, or the like, a tread member smoothly deforms to enwrap these protrusions or small stones (hereinafter, referred to as envelope properties), and thus, riding comfort is desirably improved.

Here, the envelope properties of the tread member can be improved by increasing the thickness of the tread member in a tire radial direction. However, when the thickness of the tread member in the tire radial direction is increased, in the case in which not only a weight of the tread member is increased and but also an outer diameter of the non-pneumatic tire is not varied, the connecting member needs to be reduced in the tire radial direction and vibration absorbing performance of the connecting member may be decreased.

In addition, for example, it is considered to absorb vibrations when the non-pneumatic tire rides across the protrusions or the small stones when rigidity in a portion of the outer tube, the connecting member, or the like, other than the tread member, is decreased. However, when rigidity of the portion other than the tread member is decreased, steering stability may be decreased due to a decrease in rigidity of the entire non-pneumatic tire in the tire width direction.

Further, in the non-pneumatic tire, in particular, durability may be secured by increasing the rigidity of the outer tube, and vibrations transmitted to the outer tube must be reduced by improving the envelope properties of the tread member disposed between the ground surface and the outer tube.

In consideration of the above-mentioned circumstances, the present invention is directed to improving envelope properties of a tread member while securing steering stability and durability.

### [Solution to Problem]

A non-pneumatic tire of the present invention is provided, as claimed in claim 1.

### [Effects of Invention]

According to the present invention, envelope properties of a tread member can be improved while securing steering stability and durability.

### [Brief Description of Drawings]

Fig. 1 is a side view of a bicycle including a non-pneumatic tire according to an embodiment.
Fig. 2 is a cross-sectional view taken along line A-A of the non-pneumatic tire in Fig. 1, but which is not according to the present invention.
Fig. 3 is a view showing a variant of the non-pneumatic tire in Fig. 2, which is in accordance with an embodiment of the present invention.

### [Description of Embodiments]

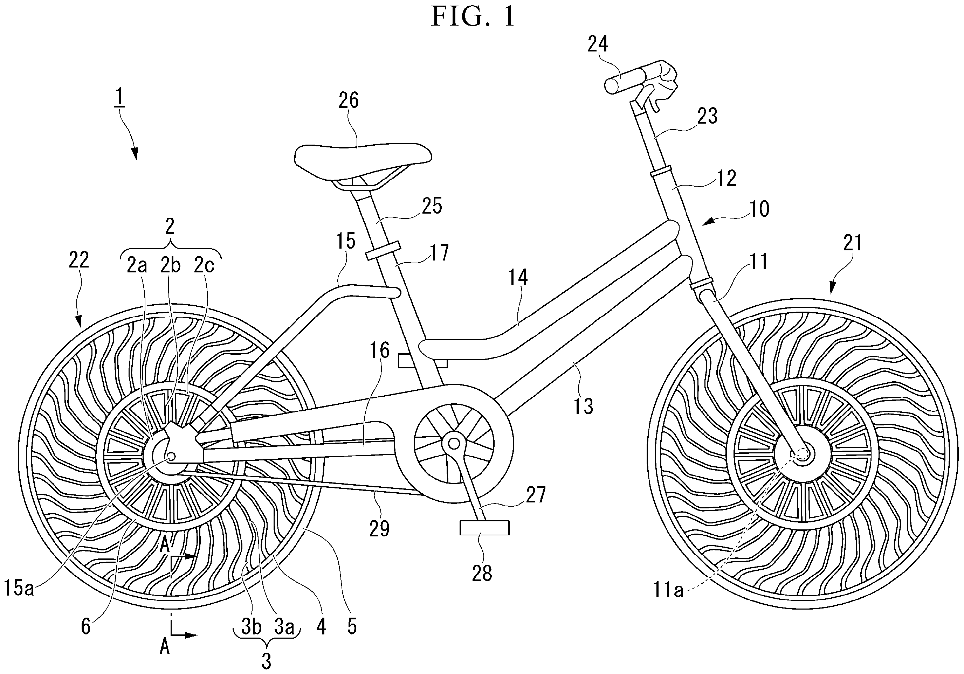

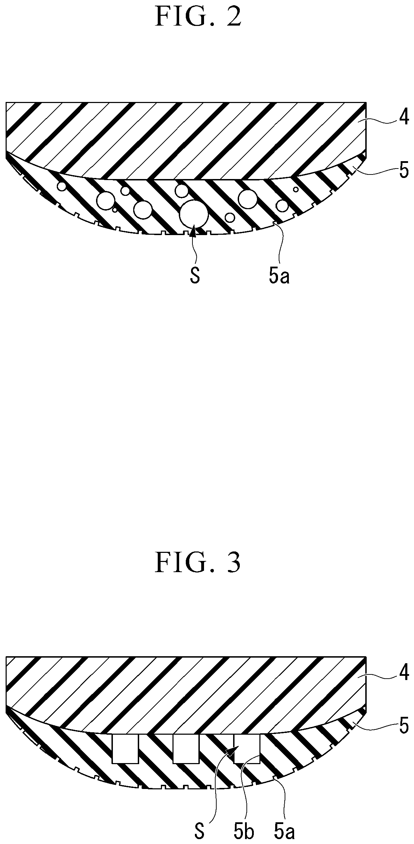

Hereinafter, a configuration of a non-pneumatic tire according to the embodiment will be described with reference to Figs. 1 and 2. Hereinafter, in the drawings used in the following description, the scales of components may be appropriately changed such that they are enlarged recognizable sizes.

### (Vehicle body)

As shown in Fig. 1, the non-pneumatic tire of the embodiment is used as a front wheel 21 and a rear wheel 22 of a bicycle 1. The front wheel 21 and the rear wheel 22 are rotatably supported by a vehicle body 10 of the bicycle 1.

The vehicle body 10 includes a front fork 11, a head pipe 12, a down tube 13, a top tube 14, a seat tube 17, a seat stay 15, and a pair of chain stays 16.

The front wheel 21 rotates about an axle 11a disposed at a lower end portion of the front fork 11, and the rear wheel 22 rotates about an axle 15a disposed at a connecting section between the seat stay 15 and the chain stays 16.

Here, in the embodiment, when seen in a side view in a rotary axis direction of the rear wheel 22 (an axial direction of the axle 15a), a circumferential direction around the rotary shaft is referred to as a tire circumferential direction, a direction perpendicular to the rotary shaft is referred to as a tire radial direction, and a direction along the rotary shaft is referred to as a tire width direction.

The front fork 11 is disposed on a front section of the bicycle 1, and the head pipe 12 is connected to an upper end portion of the front fork 11. In addition, one end portion of the down tube 13 is connected to a rear side of the head pipe 12. Further, the top tube 14 is connected to a portion of the head pipe 12 immediately above an area to which the down tube 13 is connected.

The down tube 13 and the top tube 14 gradually extend downward going rearward. In addition, the seat tube 17 gradually extends rearward as it goes upward.

A front end portion of the seat stay 15 is connected to a rear side of an upper end portion of the seat tube 17. A rear end portion of the seat stay 15 and rear end portions of the chain stays 16 are connected to each other in the vicinity of the axle of the rear wheel 22.

A sprocket (not shown) (hereinafter, referred to as "a rear sprocket") is attached to the rear wheel 22 while being disposed coaxially with the rear wheel 22.

A handle stem 23 is inserted through the head pipe 12. The handle stem 23 is pivotable with respect to the head pipe 12. A handle 24 is attached to an upper end of the handle stem 23.

A seat post 25 is fitted into the seat tube 17. A saddle 26 is attached to an upper end of the seat post 25.

One end portion of a crank 27 is attached to a connecting section between a lower end portion of the seat tube 17 and front end portions of the chain stays 16 via a sprocket (not shown) (hereinafter, referred to as "a front sprocket"), and a pedal 28 is attached to the other end portion of the crank 27. The crank 27 is pivotable around a pivot shaft in a leftward/rightward direction. In addition, the pedal 28 is disposed at the other end portion of the crank 27, and pivotable around a pivot shaft in the leftward/rightward direction. Further, the crank 27 and the pedal 28 are also provided on a left side of the bicycle 1. For this reason, the bicycle 1 includes the pair of cranks 27 and the pair of pedals 28.

A chain 29 is wound around the front sprocket and the rear sprocket. When a stepping force of a driver or the like is applied to the pedal 28, the front sprocket rotates. Rotation of the front sprocket is transmitted to the rear sprocket via the chain 29 to rotate the rear sprocket, and the rear wheel 22 is rotated by rotation of the rear sprocket.

### (Non-pneumatic tire)

The front wheel 21 and the rear wheel 22 have the same configuration as each other. Hereinafter, a configuration of the rear wheel 22 will be described as representative of the front wheel 21 and the rear wheel 22.

The rear wheel 22 includes an inner tube 6 attached to the axle 15a, an outer tube 4 configured to surround the inner tube 6 from an outer side in a tire radial direction, elastically deformable connecting members 3 configured to connect the inner tube 6 and the outer tube 4 to each other, and a tread member 5 fitted onto the outer tube 4.

The inner tube 6 is attached to the axle 15a via a wheel 2. Central axes of the inner tube 6 and the outer tube 4 are disposed coaxially with the axle 15a. The inner tube 6, the connecting members 3 and the outer tube 4 are disposed in the tire width direction in a state in which central sections thereof in the tire width direction coincide with each other.

The inner tube 6, the connecting members 3 and the outer tube 4 may be formed integrally with each other or may be formed separately from each other. In addition, the inner tube 6 and the wheel 2 may be formed integrally with each other or may be formed separately from each other.

The wheel 2 includes a mounting tube section 2a mounted rotatably with respect to the axle 15a, an exterior section 2c configured to surround the mounting tube section 2a from an outer side in the tire radial direction, and a plurality of ribs 2b configured to connect the mounting tube section 2a and the exterior section 2c to each other. The mounting tube section 2a, the plurality of ribs 2b and the exterior section 2c may be formed separately from each other or may be formed integrally with each other.

The mounting tube section 2a and the exterior section 2c are formed in a tubular shape and disposed coaxially with the axle 15a. For example, the plurality of ribs 2b are disposed at equal intervals in the tire circumferential direction. The plurality of ribs 2b extend radially about the axle 15a.

The connecting members 3 are formed in a rectangular plate shape curved as a whole, front and back surfaces thereof are directed in the tire circumferential direction, and side surfaces thereof are directed in the tire width direction. The connecting members 3 are formed of an elastically deformable material such as a resin or the like, and relatively elastically displaceably connect an outer circumferential surface side of the inner tube 6 and an inner circumferential surface side of the outer tube 4. The plurality of connecting members 3 are disposed at equal intervals in the tire circumferential direction.

The plurality of connecting members 3 each has an inner side portion 3a connected to the inner tube 6, and an outer side portion 3b connected to the outer tube 4. The inner side portion 3a and the outer side portion 3b are connected to each other in a central section of the connecting member 3 in the tire radial direction, and intersect at an obtuse angle at the connecting section when seen in a side view.

The thickness of the inner side portion 3a in the tire circumferential direction is smaller than the thickness of the outer side portion 3b in the tire circumferential direction. A thickness of the outer side portion 3b in the tire circumferential direction gradually increases as it goes outward in the tire radial direction.

The inner tube 6, the connecting members 3 and the outer tube 4 may be formed of, for example, a resin. The resin, for example, may be provided as only one resin, a mixture containing two or more resins, or a mixture containing one or more resins and one or more elastomers may be provided, and further, for example, may contain additives such as an antioxidant, a plasticizer, a filler, a pigment, or the like. In addition, the inner tube 6, the connecting members 3 and the outer tube 4 may be formed of a thermoplastic resin. When the thermoplastic resin is employed, since the inner tube 6, the connecting members 3 and the outer tube 4 can be formed through injection molding, and it is suitable for mass production and reduction in manufacturing costs.

The tread member 5 is formed of, for example, a vulcanized rubber in which a natural rubber or/and a rubber composition are vulcanized, a thermoplastic material, or the like. As the thermoplastic material, for example, a thermoplastic elastomer, a thermoplastic resin, or the like, is an exemplary example. As the thermoplastic elastomer, for example, an amide-based thermoplastic elastomer (TPA), ester-based thermoplastic elastomer (TPC), olefin-based thermoplastic elastomer (TPO), styrene-based thermoplastic elastomer (TPS), urethane-based thermoplastic elastomer (TPU), thermoplastic rubber cross-linked body (TPV), or other thermoplastic elastomers (TPZ), which are defined in Japanese Industrial Standard JIS K6418, is an exemplary example.

As the thermoplastic resin, urethane resin, olefin resin, vinyl chloride resin, polyamide resin, or the like, is an exemplary example. Further, in view of a wear resistance, the tread member 5 is preferably formed of a vulcanized rubber.

A plurality of tread grooves 5a are formed in a wheel tread of the tread member 5 at intervals in the tire width direction. Further, the wheel tread is a portion of the tread member 5 that is in contact with the ground during straight traveling.

Incidentally, in the non-pneumatic tire, the plurality of connecting members 3 or the like function as leaf springs and bend through elastic deformation while supporting a load, thus, absorbing vibrations during traveling to secure comfort during riding. Here, when a thermoplastic resin appropriate for mass production is employed as a material of the connecting members 3 or the like, it is thought that the rigidity of the thermoplastic resin varies relatively greatly according to temperature and, for example, the rigidity of the connecting members 3 or the like may also vary according to the season. That is, it is considered that rigidity of the entire non-pneumatic tire is decreased because a temperature is high at summertime, and rigidity of the entire non-pneumatic tire is increased because the temperature is low at wintertime.

For example, in order to secure a riding comfort in wintertime, when the connecting members 3 or the like are formed of a thermoplastic resin having a relatively low rigidity, rigidity of the entire non-pneumatic tire in the tire width direction is decreased, and steering stability may be decreased at summertime. In addition, for example, when rigidity of the entire non-pneumatic tire is decreased and the riding comfort is secured by a structure in which the inner tube 6, the connecting members 3 and the outer tube 4 are easily deformed as a whole, the stress applied to the members is high and durability may be decreased. Due to the above, it is desirable to improve envelope properties of the tread member 5 and a riding comfort without decreasing rigidity of the inner tube 6, the connecting members 3, the outer tube 4, or the like.

Here, in the embodiment, as shown in Fig. 2, which is not according to the present invention, a space S is formed in a portion of the tread member 5 that avoids the wheel tread of the tread member 5. In the example shown in Fig. 2, a plurality of spaces S having substantially spherical shapes with different sizes are formed in the tread member 5. The space S may be filled with air or a shock absorbing material.

In this way, since the spaces S are formed in the tread member 5, for example, when the non-pneumatic tire rides across relatively small protrusions, small stones, or the like, the tread member 5 smoothly elastically deforms such that volumes of the spaces S are reduced. Accordingly, envelope properties of the tread member 5 can be improved, and a riding comfort can be further improved by absorbing relatively small vibrations when the non-pneumatic tire rides across such protrusions, small stones, or the like. In addition, since the tread member 5 smoothly deforms in this way, it is possible to minimize local concentration of stress on the tread member 5 due to protrusions or small stones and improve durability of the tread member 5.

In addition, as described above, for example, even when rigidity of the connecting members 3 or the outer tube 4 is not decreased, since relatively small vibrations can be sufficiently absorbed by the tread member 5, rigidity of the entire non-pneumatic tire in the tire width direction can be secured and steering stability can be maintained. In addition, a spring constant of the connecting members 3 is increased by securing rigidity of the connecting members 3, and a relatively large impact when the non-pneumatic tire rides across a relatively large step or the like can be efficiently absorbed by the connecting members 3.

Further, when the spaces S are formed in the tread member 5, more comfortable traveling can be realized while reducing the weight of the tread member 5 and reducing manufacturing costs.

Further, of the present invention is not limited to the embodiment and various modifications may be made without departing from the scope of the present invention as mentioned in the appended claims.

For example, a form of the space S formed in the tread member 5 is not limited to the example in Fig. 2 and another form, in accordance with an embodiment of the invention, may be employed. For example, as shown in Fig. 3, the space S is a depression section 5b formed in an inner circumferential surface of the tread member 5. The depression section 5b is closed by the outer circumferential surface of the outer tube 4. The depression section 5b is formed in a groove shape extending in the tire circumferential direction. In the example in Fig. 3, a plurality of depression sections 5b are formed in the tire width direction. A depth of each of the depression sections 5b is larger than a depth of each of the tread grooves 5a formed in the wheel tread of the tread member 5. Each of the depression sections 5b may extend throughout the circumference of the inner circumferential surface of the tread member 5 in tire circumferential direction.

Further, high stress is applied to a central section of the tread member 5 in the tire width direction during traveling. In the example in Fig. 3, the depression sections 5b (the spaces S) are formed in the central section in the tire width direction in which high stress is generated. Accordingly, stress applied to the tread member 5 can be dispersed and the durability of the tread member 5 can be improved.

In addition, in the example in Fig. 3, the space S opens in the inner circumferential surface of the tread member 5. Accordingly, the space S can be easily defined in the tread member 5. In addition, since a shape such as a width or the like of the depression sections 5b in the tire width direction and the number of the depression sections disposed therein may be appropriately changed, envelope properties of the tread member 5 can be easily adjusted.

In addition, while the example in which the front wheel 21 and the rear wheel 22 have the same configuration has been described in the embodiment, the front wheel 21 and the rear wheel 22 may have different configurations. For example, shapes of the spaces S may be different in the front wheel 21 and the rear wheel 22. Alternatively, the spaces S may be formed in the tread member 5 of any one of the front wheel 21 and the rear wheel 22.

In addition, the components in the above-mentioned embodiment may be appropriately substituted with known components and may be appropriately combined with the above-mentioned embodiment or variants within the scope of the appended claims.

According to the non-pneumatic tire of the present invention, since the space is formed in the portion of the tread member in which the wheel tread is avoided, for example, when the non-pneumatic tire rides across relatively small protrusions, small stones, or the like, the tread member is smoothly elastically deformed such that a volume of the space is reduced. Accordingly, envelope properties of the tread member can be improved, and a riding comfort can be further improved by absorbing relatively small vibrations when the non-pneumatic tire rides across such protrusions, small stones, or the like. In addition, since the tread member is smoothly deformed in this way, it is possible to minimize local concentration of stress on the tread member due to the protrusions or the small stones and improve durability of the tread member.

In addition, as described above, for example, since relatively small vibrations can be absorbed even when rigidity of the connecting member, the outer tube, or the like, is not decreased, rigidity of the entire non-pneumatic tire in the tire width direction can be secured and steering stability can be maintained. In addition, when rigidity of the connecting member is secured, a spring constant of the connecting member can be increased, and a relatively large impact when the non-pneumatic tire rides across a relative large step or the like can be effectively absorbed by the connecting member.

Further, when the space is formed in the tread member, light traveling can be realized while reducing the weight of the tread member and reducing manufacturing costs.

Here, the space may open in the inner circumferential surface of the tread member.

In this case, when the space in the tread member opens in the inner circumferential surface of the tread member, the space can be easily defined. Further, the envelope properties can be easily adjusted by appropriately changing a shape such as a width or the like of the openings, the number of the openings disposed therein, and the like.

### [Industrial Applicability]

Envelope properties of the tread member are improved while securing steering stability and durability.

### [Reference Signs List]

1 Bicycle (two-wheeled vehicle)
2 Wheel
3 Connecting member
4 Outer tube
5 Tread member
6 Inner tube
10 Vehicle body
21 Front wheel (non-pneumatic tire)
22 Rear wheel (non-pneumatic tire)
5a Tread groove
5b Depression section
S Space

## Claims

1. A non-pneumatic tire (1) comprising:
an inner tube (6) attachable to an axle (15a);
an outer tube (4) configured to surround the inner tube (6) from an outer side in a tire radial direction;
an elastically deformable connecting member (3) configured to connect the inner tube (4) and the outer tube (6) to each other; and
a tread member (5) fitted onto the outer tube (6),
wherein a space (S) is formed in a portion of the tread member (5) in which a wheel tread of the tread member (5) is avoided, **characterized in that**:
the space (S) is a depression section (5b) formed in an inner circumferential surface of the tread member (5) and formed in a groove shape extending in the tire circumferential direction; and **in that**
the depression section (5b) extends throughout the circumference of the inner circumferential surface of the tread member (5).

2. The non-pneumatic tire according to claim 1, wherein the space (S) opens in an inner circumferential surface of the tread member (5).

## Patentansprüche

1. Luftloser Reifen (1), umfassend:
einen Innenschlauch (6), welcher an einer Achse (15a) befestigt werden kann;
einen Außenschlauch (4), welcher konfiguriert ist, um den Innenschlauch (6) von einer Außenseite in einer Radialrichtung des Reifens zu umgeben;
ein elastisch verformbares Verbindungselement (3), welches konfiguriert ist, um den Innenschlauch (4) und den Außenschlauch (6) miteinander zu verbinden; und
ein Laufflächenelement (5), welches an dem Außenschlauch (6) angebracht ist,
wobei ein Raum (S) in einem Abschnitt des Laufflächenelements (5) gebildet ist, in welchem auf eine Radlauffläche des Laufflächenelements (5) verzichtet wird, **dadurch gekennzeichnet, dass**:
der Raum (S) ein Vertiefungsabschnitt (5b) ist, welcher in einer inneren Umfangsfläche des Laufflächenelements (5) gebildet ist und eine Rillenform aufweist, welche sich in der Umfangsrichtung des Reifens erstreckt; und dass
der Vertiefungsabschnitt (5b) sich über den ganzen Umfang der inneren Umfangsfläche des Laufflächenelements (5) erstreckt.

2. Luftloser Reifen nach Anspruch 1, wobei der Raum (S) sich in einer inneren Umfangsfläche des Laufflächenelements (5) öffnet.

## Revendications

1. Bandage pneumatique sans air (1), comprenant :
un tube interne (6) pouvant être fixé sur un essieu (15a) ;
un tube externe (4) configuré pour entourer le tube interne (6) à partir d'un côté externe, dans une direction radiale du bandage pneumatique ;
un élément de connexion à déformation élastique (3) configuré pour connecter le tube interne (4) et le tube externe (6) l'un à l'autre ; et
un élément de bande de roulement (5) ajusté sur le tube externe (6) ;
dans lequel un espace (S) est formé dans une partie de l'élément de bande de roulement (5), dans laquelle une bande de roulement de roue (5) est évitée ; **caractérisé en ce que** :
l'espace (S) est une section en creux (5b) formée dans une surface circonférentielle interne de l'élément de bande de roulement (55) et formée en une forme de rainure s'étendant dans la direction circonférentielle du bandage pneumatique ; et **en ce que** :
la section en creux (5b) s'étend à travers l'ensemble de la circonférence de la surface circonférentielle interne de l'élément de bande de roulement (5).

2. Bandage pneumatique sans air selon la revendication 1, dans lequel l'espace (S) s'ouvre dans une surface circonférentielle interne de l'élément de bande de roulement (5).
